# EUROPÄISCHE PATENTSCHRIFT

(11) **EP 3 155 374 B1**
(45) Veröffentlichungstag und Bekanntmachung des Hinweises auf die Patenterteilung: **25.12.2024**
(21) Anmeldenummer: 15729779.7
(22) Anmeldetag: 09.06.2015
(51) Int. Cl.: G01C 21/16, G01C 25/00

(54) **VERFAHREN UND SYSTEM ZUR INITIALISIERUNG EINES SENSORFUSIONSSYSTEMS**
METHOD AND SYSTEM FOR INITIALIZING A SENSOR FUSION SYSTEM
PROCÉDÉ ET SYSTÈME D'INITIALISATION D'UN SYSTÈME DE FUSION DE CAPTEURS

(30) Priorität: 11.06.2014 DE 102014211175
(43) Veröffentlichungstag der Anmeldung: 19.04.2017
(73) Patentinhaber: Continental Automotive Technologies GmbH, 30175 Hannover (DE)
(72) Erfinder: STEINHARDT, Nico, 60327 Frankfurt (Main) (DE)
(74) Vertreter: Continental Corporation
(86) Internationale Anmeldenummer: PCT/EP2015/062802
(87) Internationale Veröffentlichungsnummer: WO 2015/189184

(56) Entgegenhaltungen:
- EP-A2- 1 870 669
- WO-A1-94/28435
- US-A1- 2013 138 264

## Beschreibung

Die Erfindung betrifft ein Verfahren zur Initialisierung eines Sensorfusionssystems gemäß Anspruch 1 sowie ein System zur Initialisierung eines Sensorfusionssystems gemäß Anspruch 5.

Alle Messdaten sind prinzipiell fehlerbehaftet und in vielen Fällen ist zudem eine durchgängige Verfügbarkeit der Messdaten nicht gegeben. Neben der Abhängigkeit der Messdaten von sensorinhärenten Eigenschaften sind die Messdaten darüber hinaus oftmals auch von Umgebungsbedingungen abhängig. Sensorfehler bzw. Messfehler lassen sich dabei in quasistationäre, über mehrere Messungen konstante Anteile, wie z.B. einen sog. Offset, und statistische, von Messung zu Messung zufällige Anteile, wie z.B. Rauschen, unterteilen. Während die zufälligen Anteile prinzipiell nicht deterministisch korrigierbar sind, lassen sich quasistationäre Fehler im Allgemeinen bei gegebener Beobachtbarkeit korrigieren. Nicht korrigierbare signifikante Fehler lassen sich bei gegebener Erkennbarkeit üblicherweise zumindest vermeiden. Weiterhin sind Fehler in den Messdaten oftmals erst nach dem Erfassen und Auswerten einer Reihe von Vergleichsmessungen identifizierbar.

Im Stand der Technik sind in diesem Zusammenhang bereits Sensorfusionsverfahren bekannt, welche üblicherweise auch dazu geeignet sind, Messdaten von unterschiedlichen Sensoren bzw. Sensorsystemen zu korrigieren bzw. zu filtern. Insbesondere im Automotive-Bereich sind dabei besondere Anforderungen zu berücksichtigen, da eine Vielzahl von unterschiedlichen Sensoren eine gemeinsame Umfeldsituation bzw. einen Kraftfahrzeugzustand mittels unterschiedlicher Messprinzipien erfasst und diese Umfeldsituation bzw. diesen Kraftfahrzeugzustand mittels einer Vielzahl unterschiedlicher Messdaten beschreibt. Für eine im Automotive-Bereich anwendbare Sensorfusion ist somit eine möglichst große Robustheit gegen zufällige Störungen sowie eine Erkennung und Kompensation von systematischen Fehlern gefordert. Ebenso sind zeitliche Einflüsse auf die Messdaten zu korrigieren und temporäre Ausfälle oder die Nichtverfügbarkeit von Sensoren zu überbrücken.

Die DE 10 2012 216 211 A1 beschreibt ein Verfahren zum Auswählen eines Satelliten, wobei der Satellit ein Satellit eines globalen Navigationssystems ist. Bevor ein derartiger Satellit dabei zur Positionsbestimmung bzw. eines Fahrzeugs herangezogen wird, werden die empfangenen GNSS-Signale auf unterschiedliche Arten plausibilisiert. Für diese Verifizierung werden jeweils unterschiedliche Redundanzen bzw. bekannte Zusammenhänge ausgenutzt. So offenbart die DE 10 2012 216 211 A1 etwa, aus dem Signal eines Satelliten sowohl den Abstand des Fahrzeugs zum Satelliten als auch die Relativgeschwindigkeit des Fahrzeugs zum Satelliten zu bestimmen. Der Abstand kann dabei mittels der Laufzeit des Signals bestimmt werden, während die Relativgeschwindigkeit mittels einer Phasenmessung des Signals bestimmt werden kann. Da der Abstand und die Relativgeschwindigkeit voneinander abhängen, können sie gegeneinander verifiziert werden. Weiterhin kann eine Verifizierung der aus dem Signal bestimmten Werte gegen bekannte Randbedingungen erfolgen, da ein Fahrzeug sich üblicherweise innerhalb eines bestimmten Geschwindigkeitsrahmens fortbewegt. Ebenso wird beschrieben, dass bei Empfang mehrerer Signale von unterschiedlichen Satelliten die Abstände zu mehreren Satelliten bestimmt werden und diese Abstände gleichzeitig mittels trigonometrischer Zusammenhänge und dem bekannten Abstand der Satelliten gegeneinander verifiziert werden. Schließlich ist auch eine Verifizierung des aus dem Signal bestimmten Abstands bzw. der aus dem Signal bestimmten Geschwindigkeit mittels anderer Sensoren, welche ebenfalls eine Positionsbestimmung bzw. Geschwindigkeitsbestimmung zulassen, möglich. Sofern die Signale eines Satelliten nicht verifiziert werden können, wird dieser Satellit nicht zur Positionsbestimmung bzw. zur Geschwindigkeitsbestimmung herangezogen.

Aus der DE 10 2010 063 984 A1 ist ein mehrere Sensorelemente umfassendes Sensorsystem bekannt. Die Sensorelemente sind so ausgebildet, dass sie zumindest teilweise unterschiedliche primäre Messgrößen erfassen und zumindest teilweise unterschiedliche Messprinzipien nutzen. Aus der primären Messgröße der Sensorelemente werden dann zumindest teilweise weitere Messgrößen abgeleitet. Weiterhin umfasst das Sensorsystem eine Signalverarbeitungseinrichtung, eine Schnittstelleneinrichtung sowie mehrere Funktionseinrichtungen. Die Sensorelemente sowie sämtliche Funktionseinrichtungen sind dabei mit der Signalverarbeitungseinrichtung verbunden. Die primären Messgrößen liefern also redundante Informationen, die in der Signalverarbeitungseinrichtung miteinander verglichen werden bzw. sich gegenseitig stützen können. Aus dem Vergleich der auf verschiedenem Weg berechneten Observablen können Rückschlüsse auf die Zuverlässigkeit und Genauigkeit der Observablen gezogen werden. Die Signalverarbeitungseinrichtung qualifiziert die Genauigkeit der Observablen und stellt die Observablen zusammen mit einer Genauigkeitsangabe über eine Schnittstelleneinrichtung verschiedenen Funktionseinrichtungen zur Verfügung.

Die DE 10 2012 219 478 A1 offenbart ein Sensorsystem zur eigenständigen Bewertung der Integrität seiner Daten. Das Sensorsystem wird bevorzugt in Kraftfahrzeugen verwendet und umfasst mehrere Sensorelemente, die derart ausgebildet sind, dass sie zumindest teilweise unterschiedliche primäre Messgrößen erfassen bzw. zumindest teilweise unterschiedliche Messprinzipien nutzen. Das Sensorsystem umfasst weiterhin eine Signalverarbeitungseinrichtung, welche die Sensorsignale zumindest teilweise gemeinsam auswertet und gleichzeitig die Informationsqualität der Sensorsignale bewertet. Die Signalverarbeitungseinrichtung stellt außerdem eine Information über die Widerspruchsfreiheit zumindest eines Datums einer physikalischen Größe bereit, wobei das Datum der physikalischen Größe auf Basis der Sensorsignale von Sensorelementen berechnet wird, welche die physikalische Größe entweder direkt erfassen oder aus deren Sensorsignalen die physikalische Größe berechenbar ist. Die Information über die Widerspruchsfreiheit des Datums wird nun auf Basis von direkt oder indirekt redundant vorliegenden Sensorinformationen berechnet.

Die WO 94/28435 A1 betrifft ein Navigationssystem für terrestrische Fahrzeuge mit Rohmessdaten und/oder Positions- und Geschwindigkeitslösungen von einem Global Position System (GPS)-Empfänger gemischt mit Kilometerzähler und Kursinformationen von einem Koppelnavigationsinstrument, umfassend: Eingabeschnittstellenmittel zum Akzeptieren einer Vielzahl von Roh-GPS Pseudo-Range (PR) und Pseudo-Range-Rate (PRR) Messdaten, GPS-Position und GPS-Geschwindigkeitslösungen von einem GPS-Empfänger; erste Rechenmittel zum Modellieren eines Fehlereffekts auf die Rohmessdaten und/oder Positions- und Geschwindigkeitslösungen aufgrund der selektiven Verfügbarkeit (SA); zweite Rechenmittel zum Modellieren eines Skalenfaktorfehlereffekts auf einen akkumulierten Kursfehler eines Koppelnavigations-Drehratensensors; dritte Rechenmittel zum Modellieren eines Skalenfaktorfehlereffekts eines Koppelnavigations Odometer Sensors; und Kalman-Filtermittel zum Mischen einer Vielzahl von Ausgaben von den ersten bis dritten Rechenmitteln, so dass die Ausgaben des Kursfehlers und des Kilometerzähler-Skalierungsfaktorfehlers aus mindestens einer der GPS-PRR-Rohmessungen und der GPS-Geschwindigkeitslösungen geschätzt werden.

Die EP 1 870 669 A2 betrifft ein Verfahren zur Überprüfung einer inertialen Messeinheit von Fahrzeugen, insbesondere von Luftfahrzeugen, im stationären Zustand, wobei die inertiale Messeinheit zumindest einen Beschleunigungssensor, der ein translatorisches Beschleunigungssignal liefert, und zumindest einen Drehratensensor, der ein Drehratensignal liefert, aufweist.

Die US 2013/138264 A1 betrifft ein integriertes INS/GPS-Navigationssystem für ein Fahrzeug zum Verfolgen einer Position des Fahrzeugs, umfassend: eine Trägheitsmesseinheit (IMU) mit mikroelektromechanischen System (MEM)-Sensoren zum Messen der Beschleunigung und Winkelgeschwindigkeit des Fahrzeugs;
ein Trägheitsnavigationssystem (INS) zum Erzeugen von Fahrzeugzustandsschätzungen basierend auf der Beschleunigungs- und Winkelgeschwindigkeitsmessung von der IMU;
eine Hilfsmess-(Aux)-Einheit zum Erzeugen von Hilfsmessdaten, die einen analytischen Zustand beinhalten, der aus dem mechanischen Zustand eines Fahrzeugs abgeleitet wird;
eine Global Positioning System (GPS)-Einheit zum Empfangen von GPS-Satellitensignalen von mehreren GPS-Satelliten über eine GPS-Antenne, um GPS-Messausgaben zu erzeugen, die eine absolute Position und Geschwindigkeit des Fahrzeugs anzeigen; und
ein Kalman-Filter, das die Zustandsschätzungen des INS, die Hilfsmessdaten der Aux-Einheit und die GPS-Messausgaben der GPS-Einheit kombiniert und daran eine Kalman-Filterverarbeitung durchführt;
wobei die in der Aux-Einheit enthaltene analytische Bedingung eine Beziehung zwischen einer seitlichen Richtungsgeschwindigkeit eines Fahrzeugs, einem Abstand der Sensorposition in Bezug auf eine Hinterradachse und einer Winkelgeschwindigkeit in Bezug auf die z-Achse eines Fahrzeugs ist.

Die im Stand der Technik bekannten, gattungsgemäßen Verfahren und Sensorsysteme sind jedoch insofern nachteilbehaftet, als dass bei der Initialisierung dieser Sensorsysteme auftretende Probleme nicht gebührend berücksichtigt werden. Bei der Initialsierung ist eine Vielzahl physikalischer Größen zunächst nicht bekannt ist, da unmittelbar keine Messdaten zu diesen Größen erfasst werden können. Gleichzeitig können die möglichen Fehler dieser physikalischen Größen derart groß sein, dass für eine gattungsgemäße Sensordatenfusion angenommene Linearisierungsbedingungen im Fusionsfilter ungültig werden, wodurch das Fusionsfilter und die von ihm ausgeführte Fehlerschätzung instabil werden. Dies führt zum Versagen der Sensorfusion.

Es ist daher eine Aufgabe der Erfindung, ein verbessertes Verfahren zur Initialisierung eines Sensorfusionssystems vorzuschlagen.

Diese Aufgabe wird erfindungsgemäß durch das Verfahren zur Initialisierung eines Sensorfusionssystems gemäß Anspruch 1 gelöst.

Die Erfindung betrifft ein Verfahren zur Initialisierung eines Sensorfusionssystems beim Hochfahren oder Starten des Sensorfusionssystems, wobei das Sensorfusionssystem ein Basissystem und mindestens ein Korrektursystem umfasst,
wobei vom Basissystem und vom mindestens einen Korrektursystem jeweils Messwerte erfasst werden,
wobei die Messwerte direkt oder indirekt physikalische Größen beschreiben, wobei die Messwerte jeweils mit Fehlerwerten behaftet sind, wobei die Fehlerwerte Abweichungen der Messwerte von den beschriebenen physikalischen Größen beschreiben, wobei zumindest die in den Messwerten des Basissystems indirekt beschriebenen physikalischen Größen sowie deren Fehlerwerte während der Initialisierung des Sensorfusionssystems nicht bestimmbar sind,
wobei die Messwerte nach Abschluss der Initialisierung kontinuierlich zu einem Fusionsdatensatz fusioniert werden und wobei für zumindest eine der in den Messwerten des Basissystems indirekt beschriebenen physikalischen Größen sowie deren Fehlerwerte Startwerte aus den Messwerten des mindestens einen Korrektursystems während der Initialisierung bestimmt werden.

Daraus ergibt sich der Vorteil, dass beim Hochfahren bzw. Starten des Sensorfusionssystems von Anfang an Messwerte für alle vom Sensorfusionssystem benötigten physikalischen Größen vorhanden sind. Somit ist das Sensorfusionssystem im Wesentlichen von Anfang an weitestgehend voll funktionsfähig.

Die bekannten Sensorfusionssysteme umfassen dabei üblicherweise ein sog. Fusionsfilter, das als rekursives Filter arbeitet. Die bedeutet also, dass das Fusionsfilter aus Messwerten aus der Vergangenheit auf die Gegenwart schließt. Beim Initialisieren des Sensorfusionssystems liegen aber noch keine Messwerte aus der Vergangenheit vor, weshalb das erfindungsgemäße Verfahren Startwerte aus den Messwerten des mindestens einen Korrektursystems heranzieht, um dem Fusionsfilter die Messwerte als Startwerte zur Verfügung zu stellen.

Die Erfindung nutzt den Umstand, dass das mindestens eine Korrektursystem bei der Initialisierung üblicherweise im Wesentlichen sofort Messwerte erfasst und zur Verfügung stellen kann.

Das Sensorfusionssystem fusioniert im Betrieb üblicherweise die Messdaten des Basissystems sowie des Korrektursystems zu einem gemeinsamen Fusionsdatensatz, der gegenüber den einzelnen Messdaten zuverlässiger und präziser ist und insbesondere mittels einer Fehlerschätzung eine Bewertung der Genauigkeit bzw. Zuverlässigkeit der fusionierten Messdaten gestattet.

Der Begriff "während der Initialisierung des Sensorfusionssystems" wird im Sinne der Erfindung gleichbedeutend mit "während des Hochfahrens des Sensorfusionssystems" bzw. "während des Startens des Sensorfusionssystems" verwendet und bezeichnet den Zeitrahmen des Initialisierungsprozesses des Sensorfusionssystems. Die Initialisierung wird erfindungsgemäß als abgeschlossen betrachtet, wenn das Fusionsfilter vom Basissystem alle zu seiner korrekten Funktionsweise benötigten Informationen, also sowohl die in den Messwerten des Basissystem direkt als auch indirekt beschriebenen physikalischen Größen, bereitgestellt bekommt und die Messwerte der Korrektursysteme nur noch zur Bestimmung der Fehlerwerte des Basissystems benötigt.

Bevorzugt wird das erfindungsgemäße Verfahren nicht nur bei der ersten Initialisierung des Sensorfusionssystems ausgeführt sondern auch bei einigen oder allen folgenden Reinitialisierungen.

Die indirekt beschriebenen physikalischen Größen sowie insbesondere deren Fehlerwerte werden bevorzugt mittels physikalischer bzw. mathematischer Zusammenhänge aus den direkt gemessenen physikalischen Größen bestimmt. Ein Beispiel für eine indirekt beschriebene physikalische Größe ist etwa eine Geschwindigkeit, welche indirekt über eine Positionsänderung über die Zeit beschrieben ist. Die Position als physikalische Größe wird also direkt gemessen und anschließend wird aus der Änderung der Position mit fortlaufender Zeit mittels Differentiation die Geschwindigkeit bestimmt.

Bevorzugt ist es vorgesehen, dass für die Erstellung des gemeinsamen Fusionsdatensatzes nur Messwerte mit einem identischen Zeitstempel herangezogen werden. Die Messwerte beschreiben also dieselbe physikalische Größe zum selben Zeitpunkt. Somit sind die herangezogenen Messwerte idealerweise identisch bzw. müssen es idealerweise sein. Daraus ergibt sich der Vorteil, dass Fehlerwerte der Messwerte besser und zuverlässiger identifizierbar sind. Somit verbessert sich auch die Genauigkeit bzw. Zuverlässigkeit des Fusionsdatensatzes.

Bevorzugt ist es vorgesehen, dass der gemeinsame Fusionsdatensatz zumindest die Fehlerwerte des Basissystems umfasst, wobei die Fehlerwerte des Basissystems durch Vergleich mit den Messwerten des mindestens einen Korrektursystems und ggf. durch eine Gewichtung der Messwerte des Basissystems gegen die Messwerte des mindestens einen Korrektursystems bestimmt werden.

Weiterhin ist es bevorzugt, dass das mindestens eine Korrektursystem die Startwerte und die Korrekturwerte mittels jeweils einer eigenständigen Messwerteverarbeitung bestimmt. Dazu kann das mindestens eine Korrektursystem beispielsweise eine eigenständige und vom Sensorfusionssystem weitestgehend unabhängige Vorverarbeitung der Messwerte umfassen. Insbesondere im Rahmen einer engen Kopplung, die auch als sog. tightly coupling bekannt ist, bestimmt das mindestens eine Korrektursystem zunächst selbständig die Werte derjenigen physikalischen Größen, die durch die Messwerte des mindestens einen Korrektursystems beschrieben werden. Im Rahmen dieser Vorverarbeitung ist dann auch bereits eine erste Korrektur der Messwerte des mindestens einen Korrektursystems möglich.

Erfindungsgemäß ist das Basissystem ein Trägheitsnavigationssystem und das mindestens eine Korrektursystem ein globales Satellitennavigationssystem und/oder ein Odometrienavigationssystem. Damit ist die vorliegende Erfindung insbesondere zu Navigationszwecken und für Navigationssysteme, bevorzugt in Kraftfahrzeugen, geeignet. Das Sensorfusionssystem bestimmt somit also die Position, insbesondere die Position eines Kraftfahrzeugs, aus den Messwerten. Bei dem globalen Satellitennavigationssystem kann es sich beispielsweise um ein sog. GPS-Navigationssystem handeln. Das Odometrienavigationssystem bestimmt zunächst die Geschwindigkeit z.B. über den bekannten Abrollumfang der Kraftfahrzeugreifen und ermöglicht somit eine Positionsbestimmung unter Berücksichtigung des Lenkwinkels im Rahmen einer Koppelnavigation. Besonders zweckmäßig ist es, dass das Satellitennavigationssystem mindestens zwei Satellitensignalempfänger umfasst. Dadurch verbessert sie die Qualität der erfassten Satellitensignale und somit die Zuverlässigkeit und Genauigkeit des Satellitennavigationssystems.

Erfindungsgemäß werden die Startwerte für die Fehlerwerte als Varianzen auf Basis der Messungenauigkeiten des mindestens einen Korrektursystems bestimmt. Somit wird zunächst einmal dem Umstand Rechnung getragen, dass das Sensorfusionssystem bzw. das Fusionsfilter in der Regel auch Fehlerwerte bestimmt und hierzu auf das Vorhandensein von Messwerten angewiesen ist. Indem nun also die Varianzen der Messwerte des mindestens einen Korrektursystems als Startwerte für die Fehlerwerte herangezogen werden, kann dem Sensorfusionssystem bzw. dem Fusionsfilter auch diese Größe auf vergleichsweise einfache Art und Weise zur Verfügung gestellt werden.

Insbesondere ist es bevorzugt, dass die Messungenauigkeiten dabei den Sensorspezifikationen bzw. einem Datenblatt der Sensoren des Basissysteme bzw. des mindestens einen Korrektursystems entnommen werden bzw. mittels Fehlerfortpflanzung bestimmt werden. Grundlage für die Bestimmung mittels Fehlerfortpflanzung ist die Eigenbewertung der Messgenauigkeit durch das Basissystem bzw. das mindestens eine Korrektursystem und die jeweilige Vorverarbeitung. Die Vorverarbeitung wird dabei üblicherweise ohnehin für bekannte Sensorfusionssysteme verwendet und kann somit ohne zusätzlichen Aufwand auch für das erfindungsgemäße Verfahren verwendet werden.

Erfindungsgemäß ist es vorgesehen, dass die in den Messwerten des Basissystems indirekt beschriebenen physikalischen Größen eine Geschwindigkeit und/oder eine Position und/oder einen Empfängeruhrfehler des globalen Satellitennavigationssystems und/oder eine Empfängeruhrfehlerdrift des globalen Satellitennavigationssystems umfassen. Diese Größen lassen sich direkt aus den Korrektursystemen bestimmen, insbesondere wenn es sich ein globales Satellitennavigationssystem und ein Odometrienavigationssystem handelt.

Außerdem ist es bevorzugt, dass die Startwerte schrittweise aus den Messwerten des mindestens einen Korrektursystems bestimmt werden. Daraus ergibt sich der Vorteil, dass den Initialisierungsgeschwindigkeiten und ggf. weiteren Eigenschaften der unterschiedlichen Korrektursysteme Rechnung getragen werden kann, wodurch ein an die Korrektursysteme individuell angepasstes zeitliches Bereitstellen der Messwerte als Startwerte ermöglicht wird. Die Startwerte werden also in derjenigen zeitlichen Reihenfolge bereitgestellt, wie sie von den Korrektursystemen ausgegeben werden.

Außerdem ist es insbesondere bevorzugt, dass zuerst Startwerte aus den Messwerten des Odometrienavigationssystems bestimmt werden. Das Odometrienavigationssystem hat den Vorteil, dass es unmittelbar beim Start des Fahrzeugs bereits Raddrehsignale erfassen kann und somit unmittelbar beim Start des Fahrzeugs die Geschwindigkeit bestimmen kann. Zudem sind die Raddrehsignale von besonderer Bedeutung für die Fahrzeugsicherheit, da sie nicht nur zur Geschwindigkeitsbestimmung verwendet werden, sondern auch für unterschiedliche Fahrerassistenzsysteme, wie etwa ABS oder ESC, genutzt werden.

Erfindungsgemäß werden die Fehlerwerte mittels eines Error-State-Space-Filters, insbesondere mittels eines Error-State-Space-Kalman-Filters erkannt und korrigiert. Das Error-State-Space-Filter stellt dabei ein Fusionsfilter zur Fusion der Messwerte dar, insbesondere zur Fusion von normalverteilten Messwerten. Gleichzeitig schätzt bzw. bestimmt das Error-State-Space-Filter bevorzugt die Fehlerwerte zumindest des Basissystems. Bevorzugt handelt es sich bei dem Basissystem um ein Trägheitsnavigationssystem eines Kraftfahrzeugs. Mittels der Korrektursysteme können dann die Fehlerwerte und ggf. auch unbekannte Größen des Trägheitsnavigationssystems geschätzt bzw. bestimmt werden. Eine Besonderheit des Error-State-Space-Filters ist es also, dass anstelle der Sensorsignale bzw. der Messwerte lediglich Fehlerwerte inkrementell geschätzt bzw. bestimmt werden und anschließend korrigiert werden. Die Fehlerwerte haben nämlich eine signifikant niedrigere zeitliche Dynamik als die Messwerte selbst, wodurch eine weitgehende Entkopplung der Dynamik des Error-State-Space-Filters von den Eigenschaften des Basissystems bzw. des mindestens einen Korrektursystems,
wodurch eine weitgehende Entkopplung der Dynamik des Error-State-Space-Filters von den Sensoreigenschaften erreicht wird.

Eine weitere Besonderheit des Error-State-Space-Kalman-Filters ist es, dass durch die Anbringung einer Korrektur die geschätzten bzw. bestimmten Fehlerwerte nach jedem Arbeitszyklus des Error-State-Space-Kalman-Filters Null sind, wodurch ein sonst üblicher Prädiktionsschritt zur Vorhersage der Fehlerwerte im folgenden Arbeitszyklus entfällt, wodurch sich also der Rechenaufwand für das Error-State-Space-Kalman-Filter reduziert.

Die Erfindung betrifft weiterhin ein System zur Initialisierung eines Sensorfusionssystems beim Hochfahren oder Starten des Sensorfusionssystems, wobei das Sensorfusionssystem ein Basissystem und mindestens ein Korrektursystem umfasst, wobei das Basissystem und das mindestens eine Korrektursystem jeweils dazu ausgebildet sind, Messwerte zu erfassen, wobei die Messwerte direkt oder indirekt physikalische Größen beschreiben, wobei die Messwerte jeweils mit Fehlerwerten behaftet sind, wobei die Fehlerwerte Abweichungen der Messwerte von den beschriebenen physikalischen Größen beschreiben, wobei das Sensorfusionssystem derart ausgebildet ist, dass zumindest die in den Messwerten des Basissystems indirekt beschriebenen physikalischen Größen sowie deren Fehlerwerte während der Initialisierung des Sensorfusionssystems nicht bestimmbar sind, wobei das Sensorfusionssystem dazu ausgebildet ist, die Messwerte nach Abschluss der Initialisierung kontinuierlich zu einem Fusionsdatensatz zu fusionieren und wobei das Sensorfusionssystem dazu ausgebildet ist, für zumindest eine der in den Messwerten des Basissystems indirekt beschriebenen physikalischen Größen sowie deren Fehlerwerte Startwerte aus den Messwerten des mindestens einen Korrektursystems während der Initialisierung zu bestimmen. Das erfindungsgemäße System umfasst somit alle zur Ausführung des erfindungsgemäßen Verfahrens notwendigen Vorrichtungen.

Bevorzugt ist es vorgesehen, dass das System dazu ausgebildet ist, auch bevorzugte Ausführungsformen des erfindungsgemäßen Verfahrens auszuführen.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: beispielhaft eine mögliche Ausbildungsform eines erfindungsgemäßen Systems, welches zur Positionsbestimmung ausgebildet ist, in einem Kraftfahrzeug und
- Fig. 2: beispielhaft eine weitere mögliche Ausbildungsform eines erfindungsgemäßen Systems, welches ebenfalls zur Positionsbestimmung ausgebildet ist, in einem Kraftfahrzeug.

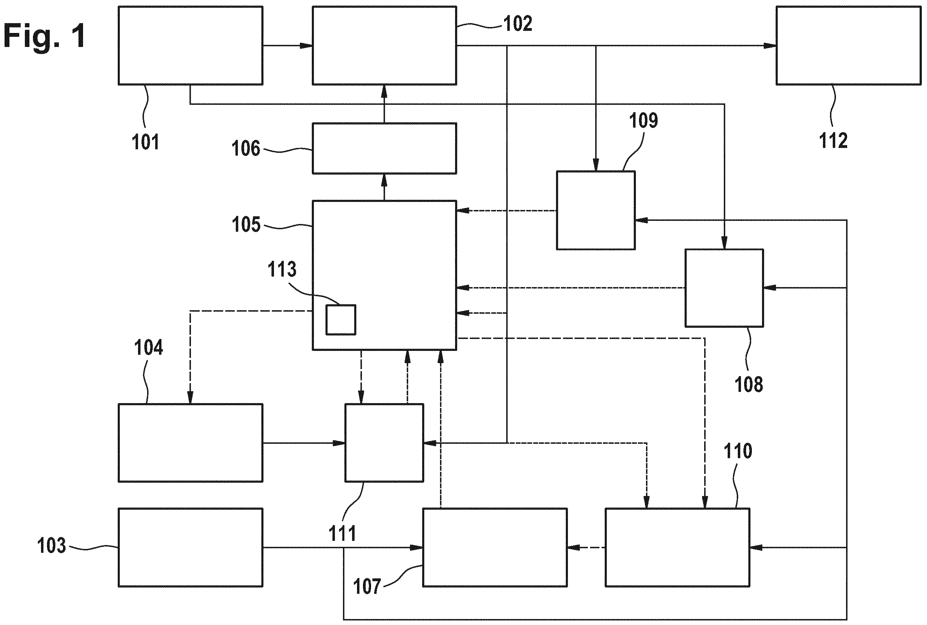

Fig. 1 zeigt in schematischer Darstellung ein Ausführungsbeispiel des erfindungsgemäßen Systems, das zur Anordnung und Verwendung in einem Kraftfahrzeug (nicht dargestellt) vorgesehen ist. Das dargestellte Sensorfusionssystem ist beispielsgemäß zur Positionsbestimmung des Kraftfahrzeugs ausgebildet. Dabei sind alle vom System umfassten Elemente bzw. Bestandteile bzw. das Basissystem bzw. die Korrektursysteme als Funktionsblöcke veranschaulicht und deren Zusammenwirken untereinander dargestellt.

Das Sensorfusionssystem umfasst Trägheitsnavigationssystem 101, das so ausgebildet ist, dass es zumindest die Beschleunigungen entlang einer ersten, einer zweiten und einer dritten Achse sowie wenigstens die Drehraten um die erste, um die zweite und um die dritte Achse erfassen kann. Die erste Achse entspricht dabei beispielsgemäß der Längsachse des Kraftfahrzeugs, die zweite Achse entspricht der Querachse des Kraftfahrzeugs und die dritte Achse entspricht der Hochachse des Kraftfahrzeugs. Diese drei Achsen bilden ein kartesisches Koordinatensystem, das sog. Kraftfahrzeugkoordinatensystem.

Trägheitsnavigationssystem 101 bildet beispielsgemäß das sog. Basissystem, dessen Messwerte mittels der im Folgenden beschriebenen sog. Korrektursysteme korrigiert werden. Die Korrektursysteme sind dabei Odometrienavigationssystem 103 und Satellitennavigationssystems 104.

Das Sensorfusionssystem weist weiterhin eine sog. Strapdown-Algorithmus-Einheit 102 auf, in welcher ein sog. Strapdown-Algorithmus durchgeführt wird, mittels dessen die Messwerte von Trägheitssensornavigationssystem 101 u.a. in Positionsdaten umgerechnet werden. Dazu werden die Messwerte von Trägheitssensornavigationssystem 101, welche naturgemäß Beschleunigungen beschreiben, zweimal über die Zeit integriert. Auch eine Ausrichtung des Kraftfahrzeugs wird mittels zweimaliger Integration der entsprechenden Messwerte von Trägheitssensornavigationssystem 101 über die Zeit bestimmt. Mittels einer Einfachintegration über die Zeit werden weiterhin die Ausrichtung und die Geschwindigkeit des Kraftfahrzeugs bestimmt. Außerdem kompensiert Strapdown-Algorithmus-Einheit 102 eine auf Trägheitssensornavigationssystem 101 wirkende Corioliskraft.

Die Ausgangsdaten von Strapdown-Algorithmus-Einheit 102 umfassen folglich die folgenden physikalischen Größen: die Geschwindigkeit, die Beschleunigung sowie die Drehrate des Kraftfahrzeugs, beispielsgemäß bezüglich der genannten drei Achsen des Kraftfahrzeugkoordinatensystems und beispielsgemäß zusätzlich jeweils bezogen auf ein Weltkoordinatensystem, das zur Beschreibung der Ausrichtung bzw. von dynamischen Größen des Kraftfahrzeugs auf der Welt geeignet ist. Beispielsgemäß handelt es sich bei dem genannten Weltkoordinatensystem um ein GPS-Koordinatensystem. Außerdem umfassen die Ausgangsdaten von Strapdown-Algorithmus-Einheit 102 die Position bezüglich des Kraftfahrzeugkoordinatensystems und die Ausrichtung hinsichtlich des Weltkoordinatensystems. Zusätzlich weisen die Ausgangsdaten von Strapdown-Algorithmus-Einheit 102 die Varianzen als Information über die Datenqualität der oben genannten physikalischen Größen auf. Diese Varianzen werden beispielgemäß nicht in Strapdown-Algorithmus-Einheit 102 berechnet, sondern nur von dieser verwendet und weitergeleitet. Die von Strapdown-Algorithmus-Einheit 102 berechneten o.g. physikalischen Größen werden über Ausgabemodul 112 ausgegeben und anderen Kraftfahrzeugsystemen zur Verfügung gestellt.

Das Sensorfusionssystem umfasst außerdem Odometrienavigationssystem 103 in Form von Raddrehzahlsensoren für jedes Rad des Kraftahrzeugs. Beispielgemäß handelt es sich um ein vierrädriges Kraftfahrzeug mit vier Raddrehzahlsensoren, die jeweils die Drehzahl des ihnen zugeordneten Rads sowie dessen Drehrichtung erfassen. Weiterhin umfasst Odometrienavigationssystem 103 ein Lenkwinkelsensorelement, das den Lenkwinkel des Kraftfahrzeugs erfasst. Zusätzlich stellt Odometrienavigationssystem 103 beispielsgemäß Fusionsfilter 105 eine Startgeschwindigkeit bzw. eine Startgeschwindigkeitsinformation bereit, zumindest beim Start bzw. Einschalten bzw. Initialisieren des Sensorfusionssystems.

Darüber hinaus weist das beispielhaft dargestellte Sensorfusionssystem Satellitennavigationssystem 104 auf, welches so ausgebildet ist, dass es die Entfernung jeweils zwischen einem zugeordneten Satelliten und dem Kraftahrzeug sowie die Geschwindigkeit jeweils zwischen dem zugeordneten Satelliten und dem Kraftfahrzeug bestimmt. Zusätzlich stellt Satellitennavigationssystem 104 beispielsgemäß Fusionsfilter 105 eine Startposition bzw. Startpositionsinformation bereit, zumindest beim Start bzw. Einschalten bzw. Initialisieren des Sensorfusionssystems.

Das Sensorfusionssystem umfasst außerdem Fusionsfilter 105. Fusionsfilter 105 stellt im Zuge der gemeinsamen Auswertung der Messdaten von Odometrienavigationssystem 103, von Satellitennavigationssystems 104 und von Trägheitssensornavigationssystem 101 einen Fusionsdatensatz 106 bereit. Fusionsdatensatz 106 weist die erfassten Messdaten der unterschiedlichen Sensorsysteme auf, wobei Fusionsdatensatz 106 beispielsgemäß zusätzlich Fehlerwerte und den Fehlerwerten zugeordnete Varianzen, welche die Datenqualität beschreiben, umfasst.

Die Messdaten bzw. Werte von Trägheitssensornavigationssystem 101 werden während des Betriebs des Kraftfahrzeugs in einem hierfür vorgesehenen elektronischen Datenspeicher 113 von Fusionsfilter 105 für einen vorgegebenen Zeitraum gespeichert. Trägheitsnavigationssystems 101 stellt dabei das sog. Basissystem dar, während Odometrienavigationssystem 103 und Satellitennavigationssystem 104 die sog. Korrektursysteme darstellen, deren Messwerte zur Korrektur der Messwerte des Basissystems herangezogen werden. Somit ist sichergestellt, dass stets Werte, die zumindest scheinbar zu einem identischen Zeitpunkt erfasst wurden, dem Vergleich unterworfen werden können.

Von Fusionsfilter 105 bereitgestellter Fusionsdatensatz 106 umfasst beispielsgemäß die mittels der plausibilisierten Messwerte der Korrektursysteme bestimmten quantitativen Fehler des Basissystems.

Strapdown-Algorithmus-Einheit 102 korrigiert nun mittels Fusionsdatensatz 106 die Messwerte des Basissystems.

Fusionsdatensatz 106 wird von Fusionsfilter 105 aus den Messwerte von Odometrienavigationssystem 103, Satellitennavigationssystems 104 und Trägheitsnavigationssystem 101 berechnet.

Fusionsfilter 105 ist beispielsgemäß als Error-State-Space-Kalman Filter ausgebildet ist, also als Kalman-Filter, das insbesondere eine Linearisierung der Messwerte ausführt und in welchem die quantitativen Fehlerwerte der Messwerte berechnet bzw. geschätzt werden und welches sequentiell arbeitet und dabei die in dem jeweiligen Funktionsschritt der Sequenz verfügbaren Messwerte korrigiert.

Fusionsfilter 105 ist so ausgebildet, dass es stets asynchron die aktuellsten von Trägheitsnavigationssystem 101, Odometrienavigationssystem 103 und Satellitennavigationssystem 104 verfügbaren Messwerte erfasst. Beispielsgemäß werden die Messwerte dabei über Kraftfahrzeugmodelleinheit 107 und Ausrichtungsmodelleinheit 109 geführt.

Kraftfahrzeugmodelleinheit 107 ist so ausgebildet, dass sie aus den Messwerte von Odometrienavigationssystem 103 zumindest die Geschwindigkeit entlang einer ersten Achse, die Geschwindigkeit entlang einer zweiten Achse sowie die Drehrate um eine dritte Achse berechnet und diese Fusionsfilter 105 bereitstellt.

Das beispielsgemäße Sensorfusionssystem umfasst außerdem Reifenparameterschätzungseinheit 110, welche so ausgebildet ist, dass sie zumindest den Halbmesser, beispielgemäß den dynamischen Halbmesser, aller Räder berechnet und zusätzlich die Schräglaufsteifigkeit und die Schlupfsteifigkeit aller Räder berechnet und diese Kraftfahrzeugmodelleinheit 107 als zusätzliche Eingangsgrößen bereitstellt. Reifenparameterschätzungseinheit 110 ist weiterhin so ausgebildet, dass sie ein im Wesentlichen lineares Reifenmodell zur Berechnung der Reifengrößen verwendet.

Die beispielgemäßen Eingangsgrößen von Reifenparameterschätzungseinheit 110 sind dabei die Raddrehzahlen und den Lenkwinkel beschreibende Messwerte, zumindest teilweise die Ausgangswerte von Strapdown-Algorithmus-Einheit 102 sowie die von Fusionsfilter 105 bestimmten Varianzen.

Das beispielsgemäße Sensorfusionssystem umfasst außerdem GPS-Fehlererkennungs-und-Plausibilisierungseinheit 111, welche so ausgebildet ist, dass sie beispielgemäß als Eingangsdaten die Messwerte von Satellitennavigationssystem 104 sowie zumindest teilweise Messwerte von Strapdown-Algorithmus-Einheit 102 erhält und in ihren Berechnungen berücksichtigt. GPS-Fehlererkennungs-und-Plausibilisierungseinheit 111 prüft die Messwerte gegen ein an Satellitennavigationssystem 104 angepasstes stochastisches Modell. Sofern die Messwerte im Rahmen einer dem Rauschen Rechnung tragenden Toleranz dem Modell entsprechen, werden sie plausibilisiert.

Dabei ist GPS-Fehlererkennungs-und-Plausibilisierungseinheit 111 zusätzlich mit Fusionsfilter 105 auf Datenebene verbunden und übermittelt die plausibilisierten Messwerte an Fusionsfilter 105.

GPS-Fehlererkennungs-und-Plausibilisierungseinheit 111 ist beispielhaft so ausgebildet, dass sie ein Verfahren zum Auswählen eines Satelliten u.a. mittels der folgenden Verfahrensschritte durchführt:
- Messen von Positionsdaten des Kraftfahrzeugs gegenüber dem Satelliten basierend auf den Sensorsignalen von Satellitennavigationssystems 104,
- Bestimmen von zu den basierend auf den Sensorsignalen von Satellitennavigationssystems 104 bestimmten Positionsdaten redundanten Referenzpositionsdaten des Kraftfahrzeugs,

- Auswählen des Satelliten, wenn eine Gegenüberstellung der Positionsdaten und der Referenzpositionsdaten einer vorbestimmten Bedingung genügt,
- wobei zur Gegenüberstellung der Positionsdaten und der Referenzpositionsdaten eine Differenz zwischen den Positionsdaten und den Referenzpositionsdaten gebildet wird,
- wobei die vorbestimmte Bedingung eine maximal zulässige Abweichung der Positionsdaten von den Referenzpositionsdaten ist,
- wobei die maximal zulässige Abweichung von einer Standardabweichung abhängig ist, die basierend auf einer Summe aus einer Referenzvarianz für die Referenzpositionsdaten und einer Messvarianz für die Positionsdaten berechnet wird und
- wobei die maximal zulässige Abweichung einem Vielfachen der Standardabweichung derart entspricht, dass eine Wahrscheinlichkeit, dass die Positionsdaten in ein von der Standardabweichung abhängiges Streuintervall fallen, einen vorbestimmten Schwellwert unterschreitet.

Das beispielsgemäße Sensorfusionssystem weist außerdem Stillstandserkennungseinheit 108 auf, welche so ausgebildet ist, dass sie einen Stillstand des Kraftfahrzeugs erkennen kann und im Falle eines erkannten Stillstands des Kraftfahrzeugs zumindest Fusionsfilter 105 Informationen aus einem Stillstandsmodell bereitstellt. Die Informationen aus einem Stillstandsmodell beschreiben dabei, dass die Drehraten um alle drei Achsen den Wert Null aufweisen und die Geschwindigkeiten entlang aller drei Achsen den Wert Null aufweisen. Stillstandserkennungseinheit 108 ist dabei beispielgemäß so ausgebildet, dass sie als Eingangsdaten die Messwerte der Raddrehzahlsensoren von Odometrienavigationssystem 103 sowie die Messwerte von Trägheitsnavigationssystem 101 nutzt.

Das Sensorfusionssystem verwendet beispielgemäß eine erste Gruppe von Messwerten, die sich auf ein Kraftfahrzeugkoordinatensystem beziehen und zusätzlich eine zweite Gruppe von Messwerte, die sich auf ein Weltkoordinatensystem beziehen, wobei das Weltkoordinatensystem zur Beschreibung der Ausrichtung und von dynamischen Größen des Kraftfahrzeugs verwendet wird. Mittels Ausrichtungsmodelleinheit 109 wird ein Ausrichtungswinkel zwischen dem Kraftfahrzeugkoordinatensystem und dem Weltkoordinatensystem bestimmt.

Der von Ausrichtungsmodelleinheit 109 bestimmte Ausrichtungswinkel zwischen dem Kraftfahrzeugkoordinatensystem und dem Weltkoordinatensystem wird dabei bestimmt auf Basis folgender physikalischer Größen:
- der vektoriellen Geschwindigkeit bezüglich des Weltkoordinatensystems,
- der vektoriellen Geschwindigkeit bezüglich des Kraftfahrzeugkoordinatensystems,
- des Lenkwinkels und
- der jeweiligen quantitativen Fehler der die genannten Größen beschreibenden Messdaten bzw. Werte.

Ausrichtungsmodelleinheit 109 greift dabei auf sämtliche der Ausgangsdaten von Strapdown-Algorithmus-Einheit 102 zurück.

Ausrichtungsmodelleinheit 109 ist beispielgemäß so ausgebildet, dass sie zusätzlich zu dem Ausrichtungswinkel noch eine Information über die Datenqualität des Ausrichtungswinkels in Form einer Varianz berechnet und Fusionsfilter 105 bereitstellt.

Fusionsfilter 105 verwendet den Ausrichtungswinkel und die Varianz des Ausrichtungswinkels bei seinen Berechnungen, deren ergebnisse er über Fusionsdatensatz 106 an Strapdown-Algorithmus-Einheit 102 weiterleitet.

Fusionsfilter 105 erfasst also die Messdaten von Trägheitsnavigationssystem 101, dem Basissystem, sowie von Odometrienavigationssystem 103 und von Satellitennavigationssystem 104, den Korrektursystemen.

Bei einer Initialisierung des beispielhaften Sensorfusionssystems werden alle vom Sensorfusionssystem umfassten Sensorsysteme, also das Basissystem 101 und die beiden genannten Korrektursysteme 103 und 104 sowie Fusionsfilter 105 initialisiert. Fusionsfilter 105 ist zur korrekten Funktionsweise auch unmittelbar nach der Initialisierung auf die in den Messwerten von Basissystem 101 direkt und indirekt beschriebenen physikalischen Größen angewiesen, welche mittels Messwerten von Korrektursystemen 103 und 104 korrigiert werden bzw. deren Fehlerwerte mittels Messwerten von Korrektursystemen 103 und 104 bestimmt werden. Da die in den Messwerten von Basissystem 101 indirekt beschriebenen physikalischen Größen, wie etwa die Position und die Geschwindigkeit des Fahrzeugs, jedoch noch nicht bestimmt werden können, werden hierfür Startwerte aus den Messwerten von Korrektursystemen 103 und 104 bestimmt. Odometrienavigationssystem 103 bestimmt beispielsgemäß eine Geschwindigkeit des Fahrzeugs und stellt diese Fusionsfilter 105 als Startwert für die Geschwindigkeitsbestimmung zur Verfügung. Ebenso wird eine Odometrienavigationssystem 103 inhärente Messungenauigkeit als Startwert für den Fehlerwert der Geschwindigkeit an Fusionsfilter 105 gegeben. Sobald Satellitennavigationssystem 104 eine erste Bestimmung der Position vorgenommen hat, wird auch die solcherart bestimmte Position als Startwert für die Position an Fusionsfilter 105 gegeben. Gleichzeitig wird eine Varianz auf Basis der Messungenauigkeit der bestimmten Position als Fehlerwert der bestimmten Position an Fusionsfilter 105 ausgegeben. Die als Startwert bestimmte Position sowie die Messungenauigkeit der Position werden dabei im Rahmen einer Vorverarbeitung der Messwerte von Satellitennavigationssystem 104 bestimmt. Ebenso wird die als Startwert bestimmte Geschwindigkeit im Rahmen einer Vorverarbeitung von Odometrienavigationssystem 103 bestimmt, nicht jedoch die als Startwert für den Fehlerwert herangezogene Messungenauigkeit. Diese entstammt beispielsgemäß den Sensorspezifikationen der einzelnen Raddrehzahlsensoren. Somit stehen Fusionsfilter 105 schon während der Initialisierung alle zur korrekten Funktionsweise benötigten Informationen zur Verfügung.

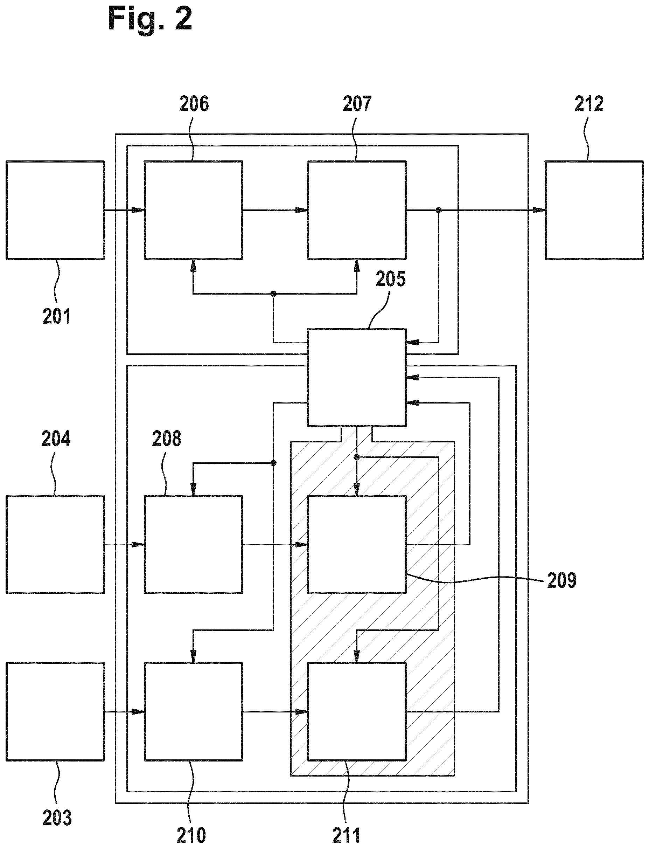

Fig. 2 zeigt beispielhaft eine weitere mögliche Ausbildungsform eines Sensorfusionssystems, welches ebenfalls zur Positionsbestimmung ausgebildet ist, in einem Kraftfahrzeug (nicht dargestellt). Das Sensorfusionssystem umfasst beispielsgemäß Trägheitsnavigationssystem 201, Satellitennavigationssystem 204 und Odometrienavigationssystem 203 als unterschiedliche Sensorsysteme. Trägheitsnavigationssystem 201, Satellitennavigationssystem 204 und Odometrienavigationssystem 203 geben Messwerte, die direkt bzw. indirekt physikalische Größen, nämlich eine Position, eine Geschwindigkeit, eine Beschleunigung, eine Ausrichtung, eine Gierrate bzw. eine Gierbeschleunigung beschreiben, an Fusionsfilter 205 aus. Die Ausgabe der Messwerte erfolgt dabei über einen Fahrzeugdatenbus, beispielsgemäß über einen sog. CAN-Bus. Beispielsgemäß gibt Satellitennavigationssystem 204 seine Messdaten in Rohdatenform an aus.

Als zentrales Element bei einer Positionsbestimmung des Kraftfahrzeugs wird Trägheitsnavigationssystem 201, bei dem es sich um eine sog. MEMS-IMU *(Micro-Electro-Mechanical-System-Inertial Measurement Unit)* handelt in Kombination mit Strapdown-Algorithmus-Einheit 207 verwendet, da dieses als fehlerfrei angenommen wird, d.h., es wird angenommen, dass die Werte von Trägheitsnavigationssystem 201 stets ihrem stochastischen Modell entsprechen, dass sie lediglich Rauscheinflüsse aufweisen und somit frei von äußeren bzw. zufälligen Fehlern bzw. Störungen sind. Das Rauschen sowie verbleibende, nicht modellierte Fehler von Trägheitsnavigationssystem 201, wie z.B. Nichtlinearität, werden dabei über den Messbereich als mittelwertfrei, stationär und normalverteilt (sog. Gaußsches Weißes Rauschen) angenommen.

Trägheitsnavigationssystem 201 umfasst drei zueinander jeweils orthogonal erfassende Drehratensensoren und drei zueinander jeweils orthogonal erfassende Beschleunigungssensoren.

Satellitennavigationssystem 204 umfasst einen GPS-Empfänger, welcher über die Satellitensignallaufzeit zunächst Entfernungsmessungen zu den empfangbaren GPS-Satelliten vornimmt und außerdem aus der Änderung der Satellitensignallaufzeit sowie zusätzlich aus der Änderung der Anzahl der Wellenlängen der Satellitensignale eine vom Kraftfahrzeug zurückgelegte Wegstrecke bestimmt. Odometrienavigationssystem 203 umfasst jeweils einen Raddrehzahlsensor an jedem Rad des Kraftfahrzeugs sowie einen Lenwinkelsensor. Die Raddrehzahlsensoren bestimmen jeweils die Raddrehgschwindigkeit des ihnen zugeordneten Rads und der Lenkwinkelsensor bestimmt den eingeschlagenen Lenkwinkel.

Trägheitsnavigationssystem 201 gibt seine Messwerte an Vorverarbeitungseinheit 206 von Trägheitssensornavigationssystem 201 aus. Vorverarbeitungseinheit 206 korrigiert nun die Messwerte bzw. die darin beschriebenen physikalischen Größen mittels Korrekturwerten, die Vorverarbeitungseinheit 206 von Fusionsfilter 205 erhält. Die solcherart korrigierten Messwerte bzw. die darin beschriebenen physikalischen Größen werden weitergeführt an Strapdown-Algorithmus-Einheit 207.

Strapdown-Algorithmus-Einheit 207 nimmt anhand der korrigierten Messdaten bzw. Werte von Vorverarbeitungseinheit 206 nun eine Positionsbestimmung vor. Diese Positionsbestimmung ist dabei eine sog. Koppelnavigation auf Basis von Trägheitsnavigationssystem 201. Dazu werden die von Vorverarbeitungseinheit 206 ausgegebenen korrigierten Messwerte bzw. die darin beschriebenen physikalischen Größen fortlaufend über die Zeit aufintegriert bzw. aufaddiert. Strapdown-Algorithmus-Einheit 207 kompensiert weiterhin eine auf Trägheitssensornavigationssystem 201 wirkende Corioliskraft, welche sich auf die Messdaten von Trägheitsnavigationssystem 201 auswirken kann. Zur Positionsbestimmung führt Strapdown-Algorithmus-Einheit 207 eine zweifache Integration der von Trägheitsnavigationssystem 201 erfassten Messwerte, welche Beschleunigungen beschreiben, über die Zeit durch. Dies ermöglicht eine Fortschreibung einer zuvor bekannten Position sowie eine Fortschreibung einer zuvor bekannten Ausrichtung des Kraftfahrzeugs. Zur Bestimmung einer Geschwindigkeit bzw. einer Drehrate des Kraftfahrzeugs führt Strapdown-Algorithmus-Einheit 207 eine einfache Integration der von Trägheitssensornavigationssystem 201 erfassten Messdaten bzw. Werte über die Zeit durch. Weiterhin korrigiert Strapdown-Algorithmus-Einheit 207 auch die bestimmte Position mittels entsprechender Korrekturwerte von Fusionsfilter 205. Fusionsfilter 205 führt in diesem Beispiel die Korrektur also nur mittelbar über Strapdown-Algorithmus-Einheit 207 aus. Die von Strapdown-Algorithmus-Einheit 207 bestimmten und korrigierten Messwerte bzw. physikalischen Größen, also die Position, die Geschwindigkeit, die Beschleunigung, die Ausrichtung, die Drehrate und die Drehbeschleunigung des Kraftfahrzeugs werden nun an Ausgabemodul 212 und an Fusionsfilter 205 geführt.

Der von Strapdown-Algorithmus-Einheit 207 ausgeführte sog. Strapdown-Algorithmus ist dabei rechnerisch nur wenig komplex und lässt sich daher als echtzeitfähiges Basissystem realisieren. Er stellt einen Verfahrensablauf zur Integration der Messwerte von Trägheitsnavigationssystem 201 zu Geschwindigkeit, Ausrichtung und Position dar und beinhaltet keine Filterung, so dass sich eine annähernd konstante Latenzzeit und Gruppenlaufzeit ergibt.

Der Begriff Basissystem beschreibt dabei dasjenige Sensorsystem, dessen Messdaten bzw. Werte mittels der Messdaten bzw. Werte der anderen Sensorsysteme, der sog. Korrektursysteme, korrigiert werden. Beispielsgemäß handelt es sich, wie bereits ausgeführt, bei den Korrektursystemen um Odometrienavigationssystem 203 und um Satellitennavigationssystem 204.

Trägheitsnavigationssystem 201, Vorverarbeitungseinheit 206 von Trägheitssensornavigationssystem 201 und Strapdown-Algorithmus-Einheit 207 bilden beispielsgemäß zusammen das sog. Basissystem, zu welchem zusätzlich anteilig auch Fusionsfilter 205 gezählt wird.

Ausgabemodul 212 gibt die von Strapdown-Algorithmus-Einheit 207 bestimmten und korrigierten physikalischen Größen an beliebige weitere Systeme des Kraftfahrzeugs weiter.

Die von Satellitennavigationssystem 204 erfassten Messwerte werden beispielsgemäß in Form von Sensorsignalen über eine sog. UART-Datenverbindung zunächst an Vorverarbeitungseinheit 208 von Satellitennavigationssystem 204 weitergeführt. Vorverarbeitungseinheit 208 bestimmt nun aus den von Satellitennavigationssystem 204 ausgegebenen Messwerten, welche GPS-Rohdaten darstellen und auch eine Beschreibung der Umlaufbahn des jeweils die GPS-Signale sendenden GPS-Satelliten umfassen, eine Position und eine Geschwindigkeit des Kraftfahrzeugs im GPS-Koordinatensystem. Außerdem bestimmt Satellitennavigationssystem 204 eine relative Geschwindigkeit des Kraftfahrzeugs zu den GPS-Satelliten, von denen GPS-Signale empfangen werden. Weiterhin korrigiert Vorverarbeitungseinheit 208 einen in den Messwerten enthaltenen Zeitfehler einer Empfängeruhr von Satellitennavigationssystem 204, welcher durch eine Drift der Empfängeruhr entsteht, sowie mittels eines Korrekturmodells die durch atmosphärische Einwirkungen auf die von den GPS-Satelliten gesendeten GPS-Signale verursachten Veränderungen in der Signallaufzeit und dem Signalweg. Die Korrektur des Zeitfehlers sowie der atmosphärischen Einwirkungen erfolgen mittels von Fusionsfilter 205 über den CAN-Bus erhalten Korrekturwerten.

Satellitennavigationssystem 204 ist weiterhin Plausibilisierungsmodul 209 zugeordnet, welches die von Vorverarbeitungseinheit 208 ausgegebenen Messwerte der physikalischen Größen, also die physikalischen Größen der Position und der Geschwindigkeit des Kraftfahrzeugs, plausibilisiert. Die von Plausibilisierungsmodul 209 plausibilisierten Messdaten bzw. Werte werden dann an Fusionsfilter 205 ausgegeben.

Das System umfasst weiterhin Vorverarbeitungseinheit 210 von Odometrienavigationssystem 203, welche über den CAN-Bus die von Odometrienavigationssystem 203 erfassten Messwerte erhält. Die erfassten Messwerte sind in diesem Fall die Messwerte der einzelnen Raddrehzahlsensoren sowie die Messwerte des Lenkwinkelsensors. Vorverarbeitungseinheit 210 bestimmt nun aus den von Odometrienavigationssystem 203 ausgegebenen Messwerte gemäß einem sog. Koppelnavigationsverfahren die Position und die Ausrichtung des Kraftfahrzeugs im Kraftfahrzeugkoordinatensystem. Weiterhin werden die Geschwindigkeit, die Beschleunigung, die Drehrate und die Drehbeschleunigung des Kraftfahrzeugs bestimmt, ebenfalls im Kraftfahrzeugkoordinatensystem. Außerdem korrigiert Vorverarbeitungseinheit 210 die von Odometrienavigationssystem 203 erhaltenen Messdaten bzw. Werte mittels von Fusionsfilter 205 erhaltenen Korrekturwerten.

Odometrienavigationssystem 203 ist weiterhin Plausibilisierungsmodul 211 zugeordnet, welches die von Vorverarbeitungseinheit 210 ausgegebenen Messwerte, also die Position, die Ausrichtung, die Geschwindigkeit, die Beschleunigung, die Drehrate und die Drehbeschleunigung des Kraftfahrzeugs plausibilisiert. Da die Störungen der Messwerte von Odometrienavigationssystem 203 häufig zufällige, umweltbedingte Störungen sind, die nicht Weißem Rauschen entsprechen, z.B. bei vergleichsweise großem Radschlupf, werden die mittels Trägheitsnavigationssystem 201 und mittels Satellitennavigationssystem 204 bestimmten Messwerte genutzt, um die Messwerte von Odometrienavigationssystem 203 zu plausibilisieren. Zunächst werden auch hier aber die Messwerte gegen ein ihnen zugeordnetes, sensorindividuelles Modell abgeglichen, welches Messunsicherheiten wie Rauscheinflüsse berücksichtigt. Sofern die Messwerte dem Modell innerhalb der gegebenen Grenzwerte bzw. Toleranzbereiche entsprechen, erfolgt hier eine erste Plausibilisierung und die solcherart plausibilisierten Werte werden weiterverarbeitet. Die plausibilisierten Werte werden dann an Fusionsfilter 205 weitergeführt. Sofern eine Plausibilisierung dieser Messwerte nicht erfolgen kann, werden die entsprechenden Messwerte verworfen und nicht weiter verarbeitet.

Die Einzelmodule Plausibilisierungsmodul 209 und Plausibilisierungsmodul 211 bilden dabei unter anteiliger Einbeziehung von Fusionsfilter 205 gemeinsam ein Plausibilisierungsmodul im Sinne der Erfindung.

Fusionsfilter 205 ist beispielsgemäß als Error-State-Space-Kalman-Filter ausgebildet. Die Hauptaufgabe von Fusionsfilter 205 ist es beispielsgemäß, die Messwerte des Basissystems, also von Trägheitsnavigationssystem 201, mittels aus Messwerte von Odometrienavigationssystem 203 und Satellitennavigationssystem 204, welche die Korrektursysteme darstellen, zu korrigieren, bzw. entsprechende Korrekturwerte an Strapdown-Algorithmus-Einheit 207 auszugeben. Da Trägheitsnavigationssystem 201 beispielsgemäß als frei von zufälligen Fehlern und äußeren Störungen angenommen wird, unterliegen die Messwerte von Trägheitsnavigationssystem 201 ausschließlich Weißem Rauschen. Aufgrund der unterschiedlichen Signalausgabeverzüge von Trägheitsnavigationssystem 201, Odometrienavigationssystem 203 und Satellitennavigationssystem 204 werden die Messwerte von Trägheitsnavigationssystem 201 über einen Zeitraum von 25 Messepochen in einem nicht dargestellten elektronischen Datenspeicher gespeichert. Somit ist sichergestellt, dass sowohl für die Messwerte von Odometrienavigationssystem 203 als auch von Satellitennavigationssystem 204 Messwerte von Trägheitsnavigationssystem 201 zum Plausibilisieren bzw. Korrigieren bzw. Fusionieren vorliegen, die zu einem identischen Zeitpunkt erfasst wurden.

Da es sich bei Fusionsfilter 205 um einen sog. Error-State-Space-Kalman-Filter handelt, werden ausschließlich die quantitativen Fehlerwerte der Messwerte bestimmt und entsprechende Korrekturen ausgeführt. Dies vereinfacht und beschleunigt die von Fusionsfilter 205 vorgenommene Fusion der Messwerte von Trägheitsnavigationssystem 201, Odometrienavigationssystem 203 und Satellitennavigationssystem 204 zu einem gemeinsamen Fusionsdatensatz. Somit wird eine echtzeitfähige Positionsbestimmung und Korrektur der Positionsbestimmung ermöglicht.

Bei einer Initialisierung des beschriebenen Sensorsystems werden aus den Messwerten von Odometrienavigationssystem 203 und Satellitennavigationssystem 204 Startwerte für diejenigen physikalischen Größen bestimmt, die in den Messwerten von Trägheitsnavigationssystem 201 nur indirekt beschrieben sind, nämlich die Geschwindigkeit, die Position, den Empfängeruhrfehler von Satellitennavigationssystems 204 und die Empfängeruhrfehlerdrift von Satellitennavigationssystems 204. Ebenso werden auch die Startwerte für die Fehlerwerte als Varianzen auf Basis der Messungenauigkeiten von Satellitennavigationssystems 204 und von Odometrienavigationssystem 203 bestimmt.

Das in Fig. 2 dargestellte System stellt einen sog. virtuellen Sensor dar, wobei Trägheitsnavigationssystem 201, Odometrienavigationssystem 203 und Satellitennavigationssystem 204 jedoch nicht Bestandteile des virtuellen Sensors sind. Ein virtueller Sensor ist ein System, welches unabhängig von der Art der eingebundenen Sensorsysteme - hier also Trägheitsnavigationssystem 201, Odometrienavigationssystem 203 und Satellitennavigationssystem 204 - stets die gleichen Ausgangsdaten bzw. Ausgaben erzeugt. Anhand der Ausgangsdaten bzw. Ausgaben ist nicht ersichtlich, welche Sensorsysteme in das System eingebunden sind.

## Patentansprüche

1. Verfahren zur Initialisierung eines Sensorfusionssystems beim Hochfahren oder Starten des Sensorfusionssystems,
wobei das Sensorfusionssystem ein als ein Trägheitsnavigationssystem (101, 201) ausgebildetes Basissystem (101, 201) und mindestens ein als ein globales Satellitennavigationssystem (104, 204) und/oder ein Odometrienavigationssystem (103, 203) ausgebildetes Korrektursystem (103, 104, 203, 204) umfasst,
wobei vom Basissystem (101, 201) und vom mindestens einen Korrektursystem (103, 104, 203, 204) jeweils Messwerte erfasst werden,
wobei die Messwerte direkt oder indirekt physikalische Größen beschreiben, wobei die Messwerte jeweils mit Fehlerwerten behaftet sind, wobei die Fehlerwerte Abweichungen der Messwerte von den beschriebenen physikalischen Größen beschreiben, wobei zumindest die in den Messwerten des Basissystems (101, 201) indirekt beschriebenen physikalischen Größen eine Geschwindigkeit und/oder eine Position und/oder einen Empfängeruhrfehler des globalen Satellitennavigationssystems (104, 204) und/oder eine Empfängeruhrfehlerdrift des globalen Satellitennavigationssystems (104, 204) umfassen und diese Größen sowie deren Fehlerwerte während der Initialisierung des Sensorfusionssystems nicht bestimmbar sind und wobei die Messwerte nach Abschluss der Initialisierung kontinuierlich zu einem Fusionsdatensatz fusioniert werden,
**dadurch gekennzeichnet, dass** für zumindest eine der in den Messwerten des Basissystems (101, 201) indirekt beschriebenen physikalischen Größen sowie deren Fehlerwerte Startwerte aus den Messwerten des mindestens einen Korrektursystems (103, 104, 203, 204) während der Initialisierung bestimmt werden, wobei die Startwerte für die Fehlerwerte als Varianzen auf Basis der Messungenauigkeiten des mindestens einen Korrektursystems (103, 104, 203, 204) bestimmt werden, wobei die Fehlerwerte mittels eines Error-State-Space-Filters (105, 205), insbesondere mittels eines Error-State-Space-Kalman-Filters (105, 205), erkannt und korrigiert werden.

2. Verfahren nach Anspruch 1,
**dadurch gekennzeichnet, dass** das mindestens eine Korrektursystem (103, 104, 203, 204) die Startwerte mittels jeweils einer eigenständigen Messwerteverarbeitung bestimmt.

3. Verfahren nach einem der Ansprüche 1 oder 2
**dadurch gekennzeichnet, dass** die Startwerte schrittweise aus den Messwerten des mindestens einen Korrektursystems (103, 104, 203, 204) bestimmt werden.

4. Verfahren nach Anspruch 3,
**dadurch gekennzeichnet, dass** zuerst Startwerte aus den Messwerten des Odometrienavigationssystems (103, 203) bestimmt werden.

5. System zur Initialisierung eines Sensorfusionssystems beim Hochfahren oder Starten des Sensorfusionssystems,
wobei das Sensorfusionssystem ein als ein Trägheitsnavigationssystem (101, 201) ausgebildetes Basissystem (101, 201) und mindestens ein als ein globales Satellitennavigationssystem (104, 204) und/oder ein Odometrienavigationssystem (103, 203) ausgebildetes Korrektursystem (103, 104, 203, 204) umfasst,
wobei das Basissystem (101, 201) und das mindestens eine Korrektursystem (103, 104, 203, 204) jeweils dazu ausgebildet sind, Messwerte zu erfassen, wobei die Messwerte direkt oder indirekt physikalische Größen beschreiben, wobei die Messwerte jeweils mit Fehlerwerten behaftet sind, wobei die Fehlerwerte Abweichungen der Messwerte von den beschriebenen physikalischen Größen beschreiben, wobei das Sensorfusionssystem derart ausgebildet ist, dass zumindest die in den Messwerten des Basissystems (101, 201) indirekt beschriebenen physikalischen Größen eine Geschwindigkeit und/oder eine Position und/oder einen Empfängeruhrfehler des globalen Satellitennavigationssystems (104, 204) und/oder eine Empfängeruhrfehlerdrift des globalen Satellitennavigationssystems (104, 204) umfassen und diese Größen sowie deren Fehlerwerte während der Initialisierung des Sensorfusionssystems nicht bestimmbar sind und wobei das Sensorfusionssystem dazu ausgebildet ist, die Messwerte nach Abschluss der Initialisierung kontinuierlich zu einem Fusionsdatensatz zu fusionieren,
**dadurch gekennzeichnet, dass** das Sensorfusionssystem dazu ausgebildet ist, für zumindest eine der in den Messwerten des Basissystems indirekt beschriebenen physikalischen Größen sowie deren Fehlerwerte Startwerte aus den Messwerten des mindestens einen Korrektursystems (103, 104, 203, 204) während der Initialisierung zu bestimmen, wobei die Startwerte für die Fehlerwerte als Varianzen auf Basis der Messungenauigkeiten des mindestens einen Korrektursystems (103, 104, 203, 204) bestimmt werden, wobei die Fehlerwerte mittels eines Error-State-Space-Filters (105, 205), insbesondere mittels eines Error-State-Space-Kalman-Filters (105, 205), erkannt und korrigiert werden.

6. System nach Anspruch 5,
**dadurch gekennzeichnet, dass** das System dazu ausgebildet ist, ein Verfahren nach mindestens einem der Ansprüche 2 bis 4 auszuführen

## Claims

1. Method for initializing a sensor fusion system when booting up or starting the sensor fusion system,
wherein the sensor fusion system comprises a base system (101, 201), which is in the form of an inertia navigation system (101, 201), and at least one correction system (103, 104, 203, 204), which is in the form of a global satellite navigation system (104, 204) and/or an odometry navigation system (103, 203),
wherein respective measured values are recorded by the base system (101, 201) and by the at least one correction system (103, 104, 203, 204),
wherein the measured values directly or indirectly describe physical variables, wherein the measured values are each afflicted by error values, wherein the error values describe deviations of the measured values from the described physical variables, wherein at least the physical variables indirectly described in the measured values of the base system (101, 201) include a speed and/or a position and/or a receiver clock error of the global satellite navigation system (104, 204) and/or a receiver clock error drift of the global satellite navigation system (104, 204) and said variables and the error values thereof cannot be determined during the initialization of the sensor fusion system and wherein the measured values are continuously fused to form a fusion data set after the initialization has concluded, **characterized in that**, for at least one of the physical variables indirectly described in the measured values of the base system (101, 201) and the error values thereof, starting values are determined from the measured values of the at least one correction system (103, 104, 203, 204) during initialization, wherein the starting values for the error values are determined as variances based on the measurement inaccuracies of the at least one correction system (103, 104, 203, 204), wherein the error values are identified and corrected by means of an error state space filter (105, 205), in particular by means of an error state space Kalman filter (105, 205).

2. Method according to Claim 1,
**characterized in that** the at least one correction system (103, 104, 203, 204) determines the starting values by means of respective independent measured value processing.

3. Method according to either of Claims 1 and 2,
**characterized in that** the starting values are determined from the measured values of the at least one correction system (103, 104, 203, 204) in stages.

4. Method according to Claim 3,
**characterized in that** starting values are first determined from the measured values of the odometry navigation system (103, 203).

5. System for initializing a sensor fusion system when booting up or starting the sensor fusion system,
wherein the sensor fusion system comprises a base system (101, 201), which is in the form of an inertia navigation system (101, 201), and at least one correction system (103, 104, 203, 204), which is in the form of a global satellite navigation system (104, 204) and/or an odometry navigation system (103, 203),
wherein the base system (101, 201) and the at least one correction system (103, 104, 203, 204) are each designed to record measured values, wherein the measured values directly or indirectly describe physical variables, wherein the measured values are each afflicted by error values, wherein the error values describe deviations of the measured values from the described physical variables, wherein the sensor fusion system is designed such that at least the physical variables indirectly described in the measured values of the base system (101, 201) include a speed and/or a position and/or a receiver clock error of the global satellite navigation system (104, 204) and/or a receiver clock error drift of the global satellite navigation system (104, 204) and said variables and the error values thereof cannot be determined during the initialization of the sensor fusion system and wherein the sensor fusion system is designed to fuse the measured values continuously to form a fusion data set after the initialization has concluded, **characterized in that** the sensor fusion system is designed, for at least one of the physical variables indirectly described in the measured values of the base system and the error values thereof, to determine starting values from the measured values of the at least one correction system (103, 104, 203, 204) during initialization, wherein the starting values for the error values are determined as variances based on the measurement inaccuracies of the at least one correction system (103, 104, 203, 204), wherein the error values are identified and corrected by means of an error state space filter (105, 205), in particular by means of an error state space Kalman filter (105, 205).

6. System according to Claim 5,
**characterized in that** the system is designed to carry out a method according to at least one of Claims 2 to 4.

## Revendications

1. Procédé d'initialisation d'un système de fusion de capteurs lors du démarrage ou de la mise en route du système de fusion de capteurs,
le système de fusion de capteurs comportant un système de base (101, 201) réalisé sous la forme d'un système de navigation inertielle (101, 201) et au moins un système de correction (103, 104, 203, 204) réalisé sous la forme d'un système global de navigation par satellite (104, 204) et/ou d'un système de navigation odométrique (103, 203),
des valeurs de mesure étant respectivement acquises par le système de base (101, 201) et par l'au moins un système de correction (103, 104, 203, 204), les valeurs de mesure décrivant directement ou indirectement des grandeurs physiques, les valeurs de mesure étant respectivement affectées de valeurs d'erreur, les valeurs d'erreur décrivant des écarts des valeurs de mesure par rapport aux grandeurs physiques décrites, au moins les grandeurs physiques décrites indirectement dans les valeurs de mesure du système de base (101, 201) comprenant une vitesse et/ou une position et/ou une erreur d'horloge de récepteur du système global de navigation par satellite (104, 204) et/ou une dérive d'erreur d'horloge de récepteur du système global de navigation par satellite (104, 204) et ces grandeurs ainsi que leurs valeurs d'erreur ne pouvant pas être déterminées pendant l'initialisation du système de fusion de capteurs, et les valeurs de mesure étant fusionnées continuellement en un ensemble de données de fusion après la fin de l'initialisation,
**caractérisé en ce que**, pour au moins l'une des grandeurs physiques décrites indirectement dans les valeurs de mesure du système de base (101, 201) ainsi que leurs valeurs d'erreur, des valeurs de départ sont déterminées à partir des valeurs de mesure de l'au moins un système de correction (103, 104, 203, 204) pendant l'initialisation, les valeurs de départ pour les valeurs d'erreur étant déterminées en tant que variances sur la base des incertitudes de mesure de l'au moins un système de correction (103, 104, 203, 204), les valeurs d'erreur étant reconnues et corrigées au moyen d'un filtre à espace-état d'erreur (105, 205), notamment au moyen d'un filtre Kalman à espace-état d'erreur (105, 205).

2. Procédé selon la revendication 1,
**caractérisé en ce que** l'au moins un système de correction (103, 104, 203, 204) détermine les valeurs de départ au moyen d'un traitement respectif de valeurs de mesure autonome.

3. Procédé selon l'une des revendications 1 ou 2,
**caractérisé en ce que** les valeurs de départ sont déterminées pas à pas à partir des valeurs de mesure de l'au moins un système de correction (103, 104, 203, 204).

4. Procédé selon la revendication 3,
**caractérisé en ce que** des valeurs de départ sont tout d'abord déterminées à partir des valeurs de mesure du système de navigation odométrique (103, 203).

5. Système d'initialisation d'un système de fusion de capteurs lors du démarrage ou de la mise en route du système de fusion de capteurs,
le système de fusion de capteurs comportant un système de base (101, 201) réalisé sous la forme d'un système de navigation inertielle (101, 201) et au moins un système de correction (103, 104, 203, 204) réalisé sous la forme d'un système global de navigation par satellite (104, 204) et/ou d'un système de navigation odométrique (103, 203),
le système de base (101, 201) et l'au moins un système de correction (103, 104, 203, 204) étant chacun configuré pour acquérir des valeurs de mesure, les valeurs de mesure décrivant directement ou indirectement des grandeurs physiques, les valeurs de mesure étant respectivement affectées de valeurs d'erreur, les valeurs d'erreur décrivant des écarts des valeurs de mesure par rapport aux grandeurs physiques décrites, le système de fusion de capteurs étant configuré de telle sorte qu'au moins les grandeurs physiques décrites indirectement dans les valeurs de mesure du système de base (101, 201) comprennent une vitesse et/ou une position et/ou une erreur d'horloge de récepteur du système global de navigation par satellite (104, 204) et/ou une dérive d'erreur d'horloge de récepteur du système global de navigation par satellite (104, 204) et ces grandeurs ainsi que leurs valeurs d'erreur ne peuvent pas être déterminées pendant l'initialisation du système de fusion de capteurs, et le système de fusion de capteurs étant configuré pour fusionner continuellement les valeurs de mesure en un ensemble de données de fusion après la fin de l'initialisation,
**caractérisé en ce que** le système de fusion de capteurs est configuré pour, pour au moins l'une des grandeurs physiques décrites indirectement dans les valeurs de mesure du système de base ainsi que leurs valeurs d'erreur, déterminer des valeurs de départ à partir des valeurs de mesure de l'au moins un système de correction (103, 104, 203, 204) pendant l'initialisation, les valeurs de départ pour les valeurs d'erreur étant déterminées en tant que variances sur la base des incertitudes de mesure de l'au moins un système de correction (103, 104, 203, 204), les valeurs d'erreur étant reconnues et corrigées au moyen d'un filtre à espace-état d'erreur (105, 205), notamment au moyen d'un filtre Kalman à espace-état d'erreur (105, 205).

6. Système selon la revendication 5,
**caractérisé en ce que** le système est configuré pour mettre en oeuvre un procédé selon au moins l'une des revendications 2 à 4.
